# EUROPEAN PATENT APPLICATION

(11) **EP 2 523 102 A1**
(43) Date of publication of application: **14.11.2012**
(21) Application number: 10855798.4
(22) Date of filing: 27.09.2010
(51) Int. Cl.: G06F 9/44

(54) **METHOD AND APPARATUS FOR REDRAWING WIDGET**

(30) Priority: 13.08.2010 CN 201010255785
(71) Applicant: ZTE Corporation, Shenzhen, Guangdong 518057 (CN)
(72) Inventor: YU, Jianfei, Shenzhen Guangdong 518057 (CN)
(74) Representative: Jansen, Cornelis Marinus
(86) International application number: PCT/CN2010/077353
(87) International publication number: WO 2012/019377

(57) **Abstract**

A method for redrawing a Widget is provided, which specifically includes: creating a three-dimensional container, and inserting a Widget with plane coordinates and a Z coordinate into the 3D container; informing the three-dimensional container when the Widget is changed; determining, by the three-dimensional container, whether the Z coordinate of the changed Widget is equal to a Z coordinate of another Widget, if yes, performing a redrawing according to a Widget redrawing flow on the same plane, otherwise, redrawing the changed Widget and completing the redrawing. An apparatus for redrawing a Widget is further provided. By means of the above method and apparatus, Widgets in different layers can be redrawn without a redundant redrawing operation, so that a refresh efficiency of a display interface is improved

## Description

### TECHNICAL FIELD

The present disclosure relates to a technology for display refresh of a Man-Machine Interface (MMI) on a terminal device, and particularly to a method and an apparatus for redrawing of a Widget.

### BACKGROUND

A BREW UI Widget (BUIW) is a new UI-package developed by an American Qualcomm after 2004. The BUIW is a User Interface (UI) management framework based on a Binary Runtime Environment for Wireless (BREW). Through integration and organization of UI elements such as man-machine interaction, event handling, interface display and the like, a BREW UI programmer may easily develop a BREW UI application program.

A Widget in the BUIW is used to display a specific UI such as a text, an image and the like on a screen, and the Widget has a specific extent and can interact with a user by responding a keying or a clicking. The Widget is put into a container which is responsible to organize and manage an internal Widget, for example a layout of the Widget, event handling and the like.

A container may have many different Widgets and can record positions of all the Widgets. When one Widget in the container is changed and needs to be redisplayed, the Widget should inform the container in advance; and the container determines which Widget needs to be redrawn according to an overlapping region of the respective Widgets, and then informs a display position and a region of the Widget needing to be redrawn to the Widget to refresh itself. The more accurate a calculation of an overlapping region is, the smaller a region needing to be redrawn is and the higher a redrawing efficiency is.

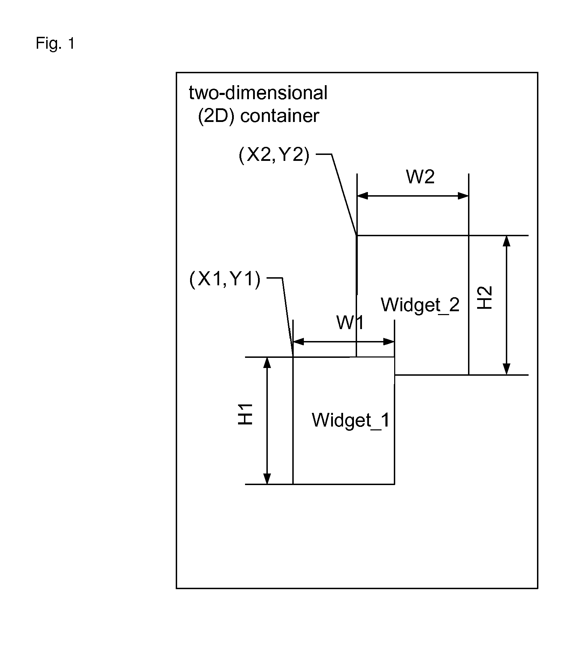

Fig. 1 is an effect drawing of an overlapping region of Widgets in an existing calculation container of a BUIW. As shown in Fig. 1, there are two Widgets in the two-dimensional (2D) container, which are a Widget_1 and a Widget_2; and the 2D container records X coordinates and Y coordinates of the two Widgets, and the Widgets record their own width (W) and height (H) respectively. In this way, according to the X coordinates and Y coordinates of the two Widgets and the W and H obtained from the two Widgets, the container may calculate an overlapping region of the two Widgets in the container, and thus redraw the Widget_1 and the Widget_2 according to the overlapping region.

The drawback of the existing method is that: only plane coordinates of the Widgets, i.e., the X coordinates and Y coordinates, are recorded in the container; however, if the two Widgets are distributed in different layers, as the container can only calculate the X coordinates and the Y coordinates by the current calculation method, the container can still obtain an overlapping region through a calculation; therefore, when such an error occurs, the container will carry out a redundant redrawing operation, thereby resulting in a low refresh efficiency of a display interface.

### SUMMARY

In view of the problem above, the main purpose of the present disclosure is to provide a method and an apparatus for redrawing a Widget, which can effectively avoid a redundant redrawing operation during redrawing of the Widgets on different layers.

In order to achieve the purpose above, the technical solution of the present disclosure is realized as follows.

The present disclosure provides a method for redrawing a Widget, which includes:
creating a three-dimensional (3D) container, and inserting a Widget with plane coordinates and a Z coordinate into the 3D container; and
informing the 3D container when the Widget is changed; determining, by the 3D container, whether the Z coordinate of the changed Widget is equal to a Z coordinate of another Widget, and, if yes, performing a redrawing according to a Widget redrawing flow on the same plane, otherwise, redrawing the changed Widget.

Wherein, the 3D container may include: an X coordinate of a plane, a Y coordinate of the plane, and a Z coordinate perpendicular to the plane formed by the X coordinate and the Y coordinate.

Wherein, the another Widget may include: one or more Widgets in the 3D container except the changed Widget.

Wherein, the step of determining by the 3D container whether the Z coordinate of the changed Widget is equal to the Z coordinate of the another Widget may include: determining whether the Z coordinate of each of the one or more Widgets is equal to the Z coordinate of the changed Widget.

Wherein, the Widget redrawing flow on the same plane may include: determining, according to a display range of the changed Widget and a display range of the another Widget on the same plane, whether there is an overlapping region between the display range of the changed Widget and the display range of the another Widget, if yes, redrawing the another Widget at first and then redrawing the changed Widget at last, otherwise, directly redrawing the changed Widget.

Wherein, the display range may be calculated according to the X coordinate and the Y coordinate of the plane of the Widget, a width of the Widget and a height of the Widget.

The present disclosure further provides an apparatus for redrawing a Widget, which includes: a container module and a Widget module, wherein
the container module is configured to create a three-dimensional (3D) container, receive a notification message from the Widget module, determine whether a Z coordinate of a changed Widget is equal to a Z coordinate of another Widget, if yes, perform a redrawing according to a Widget redrawing flow on the same plane, otherwise, redraw the changed Widget; and
the Widget module is configured to insert a Widget with plane coordinates and a Z coordinate into the 3D container created by the container module, and send the notification message to the container module.

Wherein, the 3D container created by the container module may include: an X coordinate of a plane, a Y coordinate of the plane, and a Z coordinate perpendicular to the plane formed by the X coordinate and the Y coordinate.

Wherein, the another Widget may include: one or more Widgets in the 3D container except the changed Widget.

Wherein, the container module may be configured to determine whether the Z coordinate of the changed Widget is equal to the Z coordinate of the another Widget through a following way:
determine whether the Z coordinate of each of the one or more Widgets is equal to the Z coordinate of the changed Widget.

The method and the apparatus for redrawing a Widget according to the present disclosure include: creating a three-dimensional container, and inserting a Widget with plane coordinates and a Z coordinate into the 3D container; informing the three-dimensional container when the Widget is changed; determining, by the three-dimensional container, whether the Z coordinate of the changed Widget is equal to a Z coordinate of another Widget, if yes, performing a redrawing according to a Widget redrawing flow on the same plane, otherwise, redrawing the changed Widget. By adding the Z coordinate only, the present disclosure can avoid a redundant redrawing operation during redrawing of Widgets on different layers, and thus improve a refresh efficiency of a display interface.

### BRIEF DESCRIPTION OF THE DRAWINGS

Fig. 1 is an effect drawing of an overlapping region of Widgets in an existing calculation container of a BUIW;
Fig. 2 is a flow diagram of a method for redrawing a Widget according to the present disclosure;
Fig. 3 is a rendering of a 3D container supporting a Z coordinate according to the present disclosure;
Fig. 4 is a flow diagram of a specific example of a method for creating a 3D container and inserting a Widget with plane coordinates and a Z coordinate into the 3D container according to the present disclosure; and
Fig. 5 is a structure diagram of an apparatus for redrawing a Widget according to the present disclosure.

### DETAILED DESCRIPTION

The basic idea of the present disclosure is: creating a 3D container, and inserting a Widget with plane coordinates and a Z coordinate into the 3D container; informing the 3D container when the Widget is changed; determining by the 3D container whether the Z coordinate of the changed Widget is equal to a Z coordinate of another Widget, if yes, performing a redrawing according to a Widget redrawing flow on the same plane, otherwise, redrawing the changed Widget and completing a redrawing.

The technical solution of the present disclosure will be described in combination with the accompanying drawings and specific embodiments hereinafter.

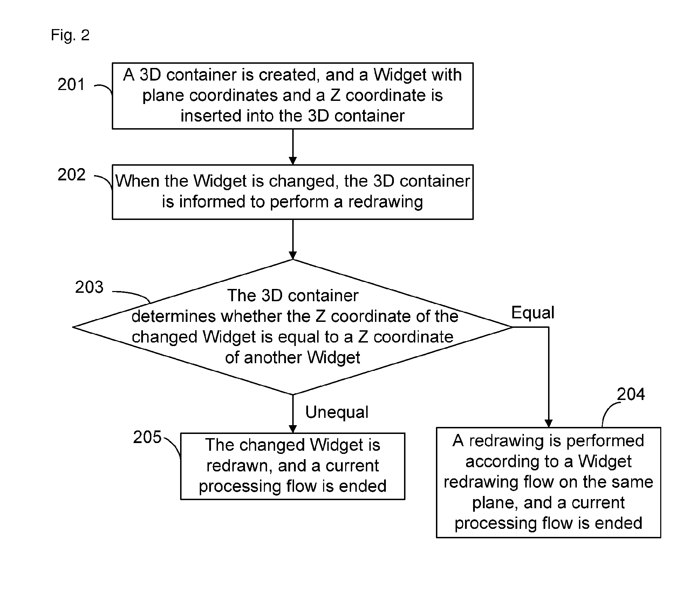

Fig. 2 is a flow diagram of a method for redrawing a Widget according to the present disclosure; as shown in Fig. 2, the method for redrawing a Widget specifically includes the following steps.

Step 201, a 3D container is created, and a Widget with plane coordinates and a Z coordinate is inserted into the 3D container.

Specifically, the plane coordinates include an X coordinate of a plane, a Y coordinate of the plane, and the Z coordinate is perpendicular to the plane formed by the X coordinate and the Y coordinate.

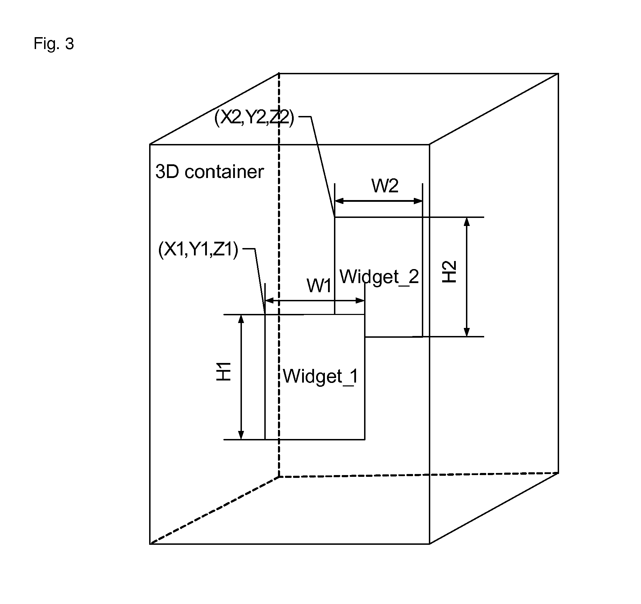

Fig. 3 is an effect drawing of a 3D container supporting a Z coordinate according to the present disclosure; as shown in Fig. 3, in the 3D container, a Widget_1 and a Widget_2 both have X coordinates, Y coordinates, and Z coordinates indicating that the Widget_1 and the Widget_2 are on different planes. Meanwhile, the Widget_1 and the Widget_2 further have a W1 and an H1, and a W2 and an H2 respectively, which indicates their respective extents.

Step 202, when the Widget is changed, the 3D container is informed to perform a redrawing.

Specifically, when the position or extent of the Widget is changed, the 3D container will be informed to perform a redrawing. The X coordinate, Y coordinate, Z coordinate, W and H of the Widget needing to be redrawn are carried in a notification message for notifying the container. The change of the Widget is triggered by a user through a man-machine operation, wherein the change of the Widget may be: enlarging or reducing the Widget that displays an image, or moving the Widget.

Step 203, the 3D container determines whether the Z coordinate of the changed Widget is equal to a Z coordinate of another Widget, if yes, Step 204 is executed, otherwise, Step 205 is executed.

Specifically, the 3D container records the X coordinates, Y coordinates and Z coordinates of all Widgets respectively, and the Widgets record their respective W and H. The another Widget includes: other one or more Widgets in the 3D container. When the 3D container has other more Widgets, the 3D container determines respectively and successively whether a Z coordinate of each of the other more Widgets is equal to the Z coordinate of the changed Widget, wherein if a determining result is that there is one or more Widgets with the equal Z coordinate, then it means that these Widgets and the changed Widget are located on the same plane, and Step 204 is executed specific to these Widgets and the changed Widget; since other Widgets with an unequal Z coordinate are located on different planes, the other Widgets do not need to be redrawn; if there are no Widget with the equal Z coordinate, Step 205 will be executed.

Step 204, a redrawing is performed according to a Widget redrawing flow on the same plane, and a current processing flow is ended.

Specifically, the Widget redrawing flow on the same plane includes: determining, according to a display range of the changed Widget and a display range of another Widget on the same plane, whether there is an overlapping region between the display range of the changed Widget and the display range of the another Widget, if yes, redrawing the other Widget at first and the changed Widget at last, otherwise, directly redrawing the changed Widget and completing the redrawing. Wherein, the display range is calculated according to the X coordinate, Y coordinate, W and H of the Widget. The display range obtained by the calculation is from X to X+W on a horizontal axis, and from Y to Y+H on a vertical axis. The determination of the overlapping region is to compare the display ranges of the two Widgets, for example, the display range of the Widget_1 is from X1 to X1+W1, and from Y1 to Y1+H1; the display range of the Widget_2 is from X2 to X2+W2, and from Y2 to Y2+H2; and when X2 or X2+W2 is located between X1 and X1+W1 and Y2 or Y2+H2 is located between Y1 and Y1+H1, the Widget_2 and the Widget_1 have an overlapping region.

Step 205, the changed Widget is redrawn, and a current processing flow is ended.

Specifically, the changed Widget is redrawn refers to that after the Widget is changed, the container determines the display range of the changed Widget according to the X coordinate, Y coordinate, W and H of the changed Widget and then performs the redrawing.

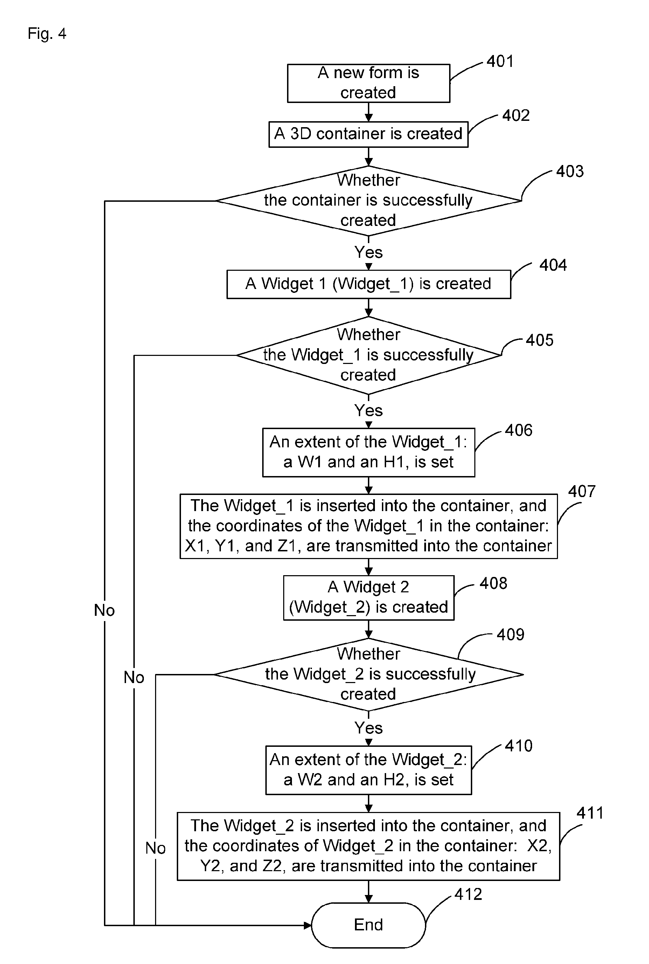

Fig. 4 is a flow diagram of a specific example of a method for creating a 3D container and inserting a Widget with plane coordinates and a Z coordinate into the 3D container according to the present disclosure; as shown in Fig. 4, the method specifically includes the following steps.
Step 401: a new form is created, wherein the form is a carrier of a container and a Widget;
Step 402: a 3D container which belongs to the form is created;
   specifically, an X coordinate, a Y coordinate and a Z coordinate may be saved in the 3D container;
Step 403: it is determined whether the 3D container is successfully created, if yes, Step 404 is executed; otherwise, Step 412 is executed;
Step 404: a Widget 1 (Widget_1) is created;
Step 405: it is determined whether the Widget_1 is successfully created, if yes, Step 406 is executed; otherwise, Step 412 is executed;
Step 406: an extent of the Widget_1: a W1 and an H1, is set;
Step 407: the Widget_1 is inserted into the container, and the coordinates of the Widget_1 in the container: X1, Y1, and Z1, are transmitted into the container;
Step 408: a Widget 2 (Widget_2) is created;
Step 409: it is determined whether the Widget_2 is successfully created, if yes, Step 410 is executed; otherwise, Step 412 is executed;
Step 410: an extent of the Widget_2: a W2 and an H2, is set;
Step 411: the Widget_2 is inserted into the container, and the coordinates of Widget_2 in the container: X2, Y2, and Z2, are transmitted into the container;
Step 412: the flow is ended.

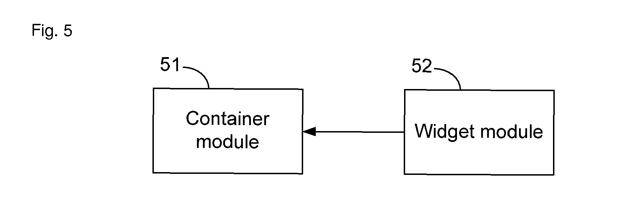

Fig. 5 is a structure diagram of an apparatus for redrawing a Widget according to the present disclosure; as shown in Fig. 5, the apparatus for redrawing a Widget specifically includes: a container module 51 and a Widget module 52, wherein,
the container module 51 is configured to create a 3D container, receive a notification message from the Widget module 52, determine whether a Z coordinate of the changed Widget is equal to a Z coordinate of another Widget, if yes, perform a redrawing according to a Widget redrawing flow on the same plane, otherwise redraw the changed Widget and completing the redrawing;
specifically, the 3D container created by the container module includes: an X coordinate of a plane, a Y coordinate of the plane, and a Z coordinate perpendicular to the plane formed by the X coordinate and the Y coordinate; and the another Widget may include: one or more Widgets in the 3D container;
when the 3D container has other more Widgets, it is determined respectively whether the Z coordinate of each of the other more Widgets is equal to the Z coordinate of the changed Widget; when the changed Widget is compared with the other more Widgets, if there is one or more equal Z coordinates, only the Widgets with the equal Z coordinate need to be redrawn according to the Widget redrawing flow on the same plane; since other Widgets with unequal Z coordinates are located on different planes, the other Widgets do not need to be redrawn; if there are no Widget with the equal Z coordinate, only the changed Widget is redrawn; wherein the changed Widget is redrawn refers to that after the Widget is changed, the container determines the display range of the Widget according to the X coordinate, Y coordinate, W and H of the changed Widget and then performs a redrawing;
the Widget redrawing flow on the same plane includes: determining, according to the display range of the changed Widget and the display range of another Widget on the same plane, whether there is an overlapping region between the display range of the changed Widget and the display range of the another Widget, if yes, redrawing the other Widget at first and the changed Widget at last; otherwise, directly redrawing the changed Widget and completing the redrawing; wherein, the display range is calculated according to the X coordinate, Y coordinate, W and H of the Widget; and
the Widget module 52 is configured to insert a Widget with plane coordinates and a Z coordinate into a 3D container created by the container module 51, and send a notification message to the container module 51;
specifically, the plane coordinates include the X coordinate and the Y coordinate; the Z coordinate is perpendicular to the plane formed by the X coordinate and the Y coordinate; and, when the Widget module 52 receives that the Widget triggered by a user through a man-machine operation is changed, the Widget module 52 sends a notification message to the container module 51; wherein the X coordinate, Y coordinate, Z coordinate, W and H of the changed Widget are carried in the notification message.

The above are preferred embodiments of the present disclosure and are not intended to limit the present disclosure. Any modification, identical replacement and improvement made without departing from the spirit and principle of the present disclosure shall be fall within the scope of protection of the present disclosure.

## Claims

1. A method for redrawing a Widget, comprising:
creating a three-dimensional (3D) container, and inserting a Widget with plane coordinates and a Z coordinate into the 3D container; and
informing the 3D container when the Widget is changed; determining, by the 3D container, whether the Z coordinate of the changed Widget is equal to a Z coordinate of another Widget, if yes, performing a redrawing according to a Widget redrawing flow on the same plane, otherwise, redrawing the changed Widget.

2. The method according to claim 1, wherein the 3D container comprises: an X coordinate of a plane, a Y coordinate of the plane, and a Z coordinate perpendicular to the plane formed by the X coordinate and the Y coordinate.

3. The method according to claim 1 or 2, wherein the another Widget comprises: one or more Widgets in the 3D container except the changed Widget.

4. The method according to claim 3, wherein the step of determining by the 3D container whether the Z coordinate of the changed Widget is equal to the Z coordinate of the another Widget comprises: determining whether the Z coordinate of each of the one or more Widgets is equal to the Z coordinate of the changed Widget.

5. The method according to claim 1 or 2, wherein the Widget redrawing flow on the same plane comprises: determining, according to a display range of the changed Widget and a display range of the another Widget on the same plane, whether there is an overlapping region between the display range of the changed Widget and the display range of the another Widget, if yes, redrawing the another Widget at first and then redrawing the changed Widget, otherwise, directly redrawing the changed Widget.

6. The method according to claim 5, wherein the display range is calculated according to the X coordinate and the Y coordinate of the plane of the Widget, a width of the Widget and a height of the Widget.

7. An apparatus for redrawing a Widget, comprising: a container module and a Widget module, wherein
the container module is configured to create a three-dimensional (3D) container, receive a notification message from the Widget module, determine whether a Z coordinate of a changed Widget is equal to a Z coordinate of another Widget, if yes, perform a redrawing according to a Widget redrawing flow on the same plane, otherwise, redraw the changed Widget; and
the Widget module is configured to insert a Widget with plane coordinates and a Z coordinate into the 3D container created by the container module, and send the notification message to the container module.

8. The apparatus according to claim 7, wherein the 3D container created by the container module comprises: an X coordinate of a plane, a Y coordinate of the plane, and a Z coordinate perpendicular to the plane formed by the X coordinate and the Y coordinate.

9. The apparatus according to claim 7 or 8, wherein the another Widget comprises: one or more Widgets in the 3D container except the changed Widget.

10. The apparatus according to claim 9, wherein the container module is configured to determine whether the Z coordinate of the changed Widget is equal to the Z coordinate of the another Widget through a following way:
determine whether the Z coordinate of each of the one or more Widgets is equal to the Z coordinate of the changed Widget.
